# EUROPÄISCHE PATENTSCHRIFT

(11) **EP 3 859 214 B1**
(45) Veröffentlichungstag und Bekanntmachung des Hinweises auf die Patenterteilung: **03.04.2024**
(21) Anmeldenummer: 21154388.9
(22) Anmeldetag: 29.01.2021
(51) Int. Cl.: F24C 15/20

(54) **VERFAHREN ZUM BETRIEB EINES SYSTEMS MIT EINER DUNSTABZUGSVORRICHTUNG, EINEM KÜCHENGERÄT UND EINEM DETEKTOR**
METHOD FOR OPERATING A SYSTEM, COMPRISING A VAPOUR EXTRACTION DEVICE, A KITCHEN APPLIANCE, AND A DETECTOR
PROCÉDÉ DE FONCTIONNEMENT D'UN SYSTEME AVEC UNE HOTTE ASPIRANTE, UN APPAREIL DE CUISINE ET UN DÉTECTEUR

(30) Priorität: 31.01.2020 CH 1132020
(43) Veröffentlichungstag der Anmeldung: 04.08.2021
(73) Patentinhaber: WESCO AG, 5430 Wettingen (CH)
(72) Erfinder: Ernst, Beat, 5430 Wettingen (CH); Bärtschi, Stephan, 5524 Niederwil AG (CH); Erni, Marcel, 5222 Umiken (CH)
(74) Vertreter: Schneiders & Behrendt Bochum

(56) Entgegenhaltungen:
- EP-A2- 1 223 386
- DE-U1-212017 000 161
- GB-A- 2 309 746

## Beschreibung

Die Erfindung betrifft ein System und ein Verfahren zum Betrieb eines Systems mit einer Dunstabzugsvorrichtung für ein Küchengerät des Systems, vorzugsweise für ein Kochfeld des Systems mit mehreren Kochplatten.

Die GB 2 309 746 A offenbart einen Detektor zur Anordnung an einem Elektrokabel eines Küchengerätes, wobei der Detektor dazu ausgebildet ist, dass zumindest festgestellt werden kann, wenn ein Stromdurchfluss im Elektrokabel des Küchengerätes ein- und/oder ausgeschaltet wird, und wobei der Detektor dazu ausgebildet ist, dies durch eine Signalübertragung an eine Steuerung einer Dunstabzugsvorrichtung zu übermitteln, und wobei die Geschwindigkeit eines Lüfters der Dunstabzugsvorrichtung in Abhängigkeit des ermittelten Stromflusses variiert wird.

Die EP 1 223 386 A2 betrifft eine Vorrichtung zum Betrieb einer steuer- bzw. regelbaren Dunstabzugshaube, wobei die Vorrichtung eine Sensorik aus einem oder mehreren Messwertaufnehmern für die Stromaufnahme eines Kochfeldes aufweist.

Die DE 21 2017 000161 U1 betrifft ein System zum Automatisieren des Einschaltens, Einstellens und / oder Ausschaltens von Absaughauben, mit einem Sensormittel, das angepasst ist, um mindestens eine physikalische Größe zu erfassen, die charakteristisch und indikativ für den Status und die Aktivität eines Kochfeldes ist.

Insbesondere in Küchen sind in ihren eingebauten Möbeln verschiedene Küchengeräte an unterschiedlichen Stellen installiert. Bekanntlich handelt es sich bei diesen Küchengeräten primär um Kochfelder mit üblicherweise mehreren Kochplatten, welche als elektrische Heizmittel mit entsprechenden fest installierten Elektrokabelanschlüssen versehen sind. Diesen Kochfeldern sind üblicherweise Dunstabzugsvorrichtungen zugeordnet, mittels der die beim Kochen entstehenden Dünste abgesogen, gefiltert und entweder als Abluft nach außen oder im Umluftbetrieb zurück in den Küchenraum befördert werden. Diese Dunstabzugsvorrichtungen sind meistens unabhängig von den Kochfeldern installiert und entsprechend mit jeweils einer separaten Stromversorgung und einer eigenen Schalteinrichtung für ihr Steuern bzw. für das Ein- und Ausschalten versehen.

Es sind Verfahren zum Betrieb der Dunstabzugsvorrichtungen bekannt, bei denen ihr Ein- und Ausschalten mit demjenigen des Kochfeldes gekoppelt wird, bei dem zum Beispiel der Strom im Elektrokabel des Küchengerätes gemessen und dies von der Abzugsvorrichtung erfasst wird. Dies setzt aber voraus, dass dieses installierte Elektrokabel des Kochfeldes freigelegt wird und ein Anschluss ihrer Leiter mit einem Messgerät und von diesem eine Verbindung mit der Steuerung der Dunstabzugsvorrichtung hergestellt werden muss, was relativ aufwändig ist und nur durch einen Elektro-Fachmann ausgeführt werden kann.

Der Erfindung liegt die Aufgabe zugrunde, ein Verfahren zum Betrieb einer Dunstabzugsvorrichtung derart zu verbessern, dass mit diesem ein elektrisches Koppeln mit dem Küchengerät für ihr Ein- und Ausschalten auf einfache Weise ermöglicht wird und keinerlei Änderungen an der elektrischen Installation des Küchengerätes vorgenommen werden müssen.

Diese Aufgabe wird erfindungsgemäß durch die Merkmale des Anspruchs 1, und des Anspruchs 7 gelöst.

Mit der Installation dieses wenigstens einen elektrischen Detektors um das Elektrokabel des Küchengerätes kann zumindest festgestellt werden, wenn ein Stromdurchfluss im Elektrokabel des Küchengerätes ein- bzw. ausgeschaltet wird, und dies wird durch eine Signalübertragung an die Steuerung der Dunstabzugsvorrichtung übermittelt und letztere kann in Abhängigkeit des ermittelten Stromflusses im Elektrokabel ein- bzw. ausgeschaltet werden.

Mit diesem Betriebsverfahren kann mit einer sehr einfachen Installation ohne Fachkunde auch im Nachhinein bei montierten und in Betrieb befindlichen Küchengeräten erreicht werden, dass die Dunstabzugsvorrichtung in Abhängigkeit des Ein- bzw. Ausschaltens des Küchengerätes selbsttätig dasselbe ausführt, wobei insbesondere ihr Abschalten auch zeitverzögert gesteuert erfolgen kann, um den verbleibenden Dunstgeschmack ganz zu eliminieren.

Erfindungsgemäß umfasst dieser Detektor einen dreiachsigen Magnetfeldsensor, welcher derart ausgestaltet ist, dass er im montierten Zustand zumindest teilweise um das Elektrokabel des Küchengerätes positioniert wird. Bevorzugt umfasst dieser Detektor einen dreiachsigen Magnetfeldsensor, welcher derart ausgestaltet ist, dass er im montierten Zustand zumindest teilweise um das Elektrokabel für das Heizmittel des Küchengerätes positioniert wird.

Aufgrund dessen, dass die Elektrokabel mit verdrillten Einzelleitern versehen sind, besteht das Problem, dass sich die bei Stromfluss entstehenden Magnetfelder gegenseitig aufheben, so dass es schwierig ist, auf diesem Wege einen Stromfluss festzustellen.

Mit dem dreiachsigen Magnetfeldsensor können zumindest die bei Stromfluss entstehenden Streufelder der Magnetfelder des Elektrokabels jederzeit sicher festgestellt werden. Bei einem Auftreten bzw. bei Wegfall solcher Streufelder wird jeweils ein entsprechendes Signal an die Steuerung der Dunstabzugsvorrichtung übertragen.

Ferner ist Gegenstand der Erfindung ein wie zuvor und im Folgenden näher beschriebenes System umfassend ein Küchengerät, eine Dunstabzugsvorrichtung und einen Detektor zur Anordnung an einem Elektrokabel des Küchengerätes, wobei die Dunstabzugsvorrichtung eine Steuerung und eine elektronische Schalteinrichtung, die dazu eingerichtet ist, ein Ein- und/oder Ausschalten der Dunstabzugsvorrichtung zu ermöglichen, aufweist, wobei der Steuerung der mit ihr verbundene Detektor zugeordnet ist, der dazu eingerichtet ist, an dem Elektrokabel für die Stromversorgung des Küchengerätes montiert zu werden, wobei der Detektor dazu ausgebildet ist, dass zumindest festgestellt werden kann, wenn ein Stromdurchfluss im Elektrokabel des Küchengerätes ein- und/oder ausgeschaltet wird, und wobei der Detektor dazu ausgebildet ist, dies durch eine Signalübertragung, insbesondere durch eine Kabel- und/oder Funkverbindung, an eine Steuerung einer Dunstabzugsvorrichtung zu übermitteln, wobei in einem Betriebszustand ein Signal an die Steuerung durch eine Kabel- und/oder Funkverbindung übertragbar ist, zumindest wenn ein Stromfluss im Elektrokabel ein- und/oder ausgeschaltet wird, und wobei die Dunstabzugsvorrichtung in Abhängigkeit des ermittelten Stromflusses im Elektrokabel ein- und/oder ausgeschaltet wird, wobei der Detektor einen dreiachsigen Magnetfeldsensor umfasst, welcher derart ausgestaltet ist, dass er in einem montierten Zustand zumindest teilweise um das Elektrokabel des Küchengerätes positioniert ist, wobei das Elektrokabel mit mehreren, insbesondere 2 bis 5, verdrillten Einzelleitern und einer diese ummantelnden Kunststoffisolation versehen ist. Mit einem solchen System kann das bereits oben und im Folgenden näher beschriebene, erfindungsgemäße Verfahren, insbesondere mit einer bereits oben und im Folgenden näher beschriebenen, erfindungsgemäßen Dunstabzugsvorrichtung sehr einfach durchgeführt werden.

Die Dunstabzugsvorrichtung kann mit einer Steuerung und einer elektronischen Schalteinrichtung versehen sein, bei der im Betriebszustand von dem am Elektrokabel des Küchengerätes positionierten Detektor durch eine Kabel- und/oder Funkverbindung ein Signal an ihre Steuerung übertragbar ist, zumindest wenn ein Stromfluss im Elektrokabel ein- bzw. ausgeschaltet wird, wobei der wenigstens eine Detektor einen dreiachsigen Magnetfeldsensor umfasst, welcher derart ausgestaltet ist, dass er in einem montierten Zustand zumindest teilweise um das Elektrokabel für das Heizmittel des Küchengerätes positioniert ist. Die Dunstabzugsvorrichtung ist vorzugsweise mit einer elektronischen Schalteinrichtung versehen, mittels welcher ein Ein- bzw. Ausschalten der Dunstabzugsvorrichtung und ein Abzug der entstehenden Dünste eines mit einem Heizmittel versehenen Küchengerätes ermöglicht wird.

Die Erfindung wird nachfolgend anhand eines Ausführungsbeispiels unter Bezugnahme auf die Zeichnung näher erläutert. Es zeigt:

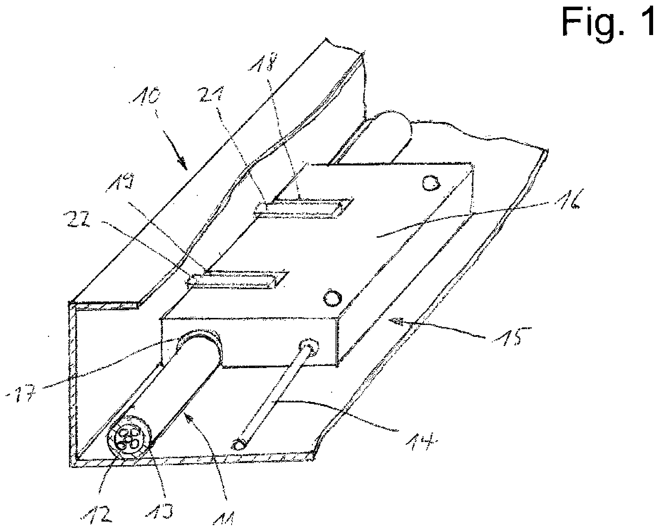

Fig. 1 einen perspektivischen ausschnittweise gezeigten Kabelkanal in einem Küchenmöbel mit einem darin installierten erfindungsgemäßen Detektor um ein Elektrokabel für ein Heizmittel eines Küchengerätes.

Fig. 1 zeigt einen Kabelkanal 10 mit einem oder mehreren durch diesen eingelegte Elektrokabel 11. Dieser Kabelkanal 10 ist zum Beispiel durch den Boden und in einer Wandung eines nicht näher gezeigten Küchenmöbels bis zu einem darin montierten Küchengerät hindurchgeführt. Bei diesem Küchengerät handelt es sich vorzugsweise um ein Kochfeld mit Kochplatten als Heizmittel, welches mit diesem Elektrokabel 11 verbunden und üblicherweise mit Wechselstrom vom Netz mit einer Spannung von beispielsweise 230V versorgt wird. Das Elektrokabel 11 ist mit mehreren zueinander verdrillten Einzelleitern 12 und einer diese ummantelnden Kunststoffisolation 13 versehen, wie diese bei Hausinstallationen gebräuchlich sind.

Bei dem Verfahren zum Betrieb vorzugsweise für dieses Kochfeld mit Kochplatten ist eine Dunstabzugsvorrichtung vorgesehen, mittels der ermöglicht wird, dass die beim Kochen entstehenden Dünste filtriert und wie erwähnt entweder als Abluft nach außen oder im Umluftbetrieb zurück in den Küchenraum geblasen werden. Als Dunstabzugsvorrichtung wird auf bekannte Weise eine Abzugshaube, die oberhalb des Kochfells des montiert ist, oder eine im Küchenmöbel mit dem Kochfeld untergebrachte verwendet, bei der die Dünste vom Kochfeld nach unten absaugt werden.

Diese Dunstabzugsvorrichtung ist dabei unabhängig vom Kochfeld installiert und entsprechend mit einer separaten Stromversorgung und einer eigenen Schalteinrichtung für ihr Steuern bzw. für ihr Ein- und Ausschalten versehen. Damit können diese Geräte unabhängig voneinander hergestellt und montiert werden, was üblich ist.

Bei den Küchengeräten kann es sich nebst Kochfeldern ebenso um Backofen-, Steamer-, Mikrowellengeräte oder kombinierte Geräte handeln, die mit entsprechenden Heizmitteln und zu diesen führende Elektrokabel für die Stromversorgung derselben ausgestattet sind. Es können diesen ebenfalls separate Dunstabzugsvorrichtungen zugeordnet sein. Selbstverständlich könnten diese Küchengeräte bzw. -möbel und die Dunstabzugsvorrichtungen nicht nur in Küchen, sondern auch in Kantinen, Kochnischen, Kochstellen oder ähnlichem installiert sein.

Erfindungsgemäß ist wenigstens ein elektrischer Detektor 15 beim Elektrokabel 11 des Küchengerätes derart um dieses installiert, dass mit dem Detektor 15 zumindest festgestellt werden kann, wenn der Stromdurchfluss im Elektrokabel 11 des Küchengerätes ein- bzw. ausgeschaltet wird, und dies vom Detektor 15 durch eine Signalübertragung an die Steuerung der Dunstabzugsvorrichtung übermittelt und letztere in Abhängigkeit des ermittelten Stromflusses im Elektrokabel ein- bzw. ausgeschaltet werden kann.

Der Detektor 15 weist ein Gehäuse 16 mit einer durchgehenden Längsnut 17 und quere Ausnehmungen 18, 19 auf und ist dabei im Kabelkanal 10 derart mit dem in diesem befindlichen Elektrokabel 11 installiert, dass letzteres in der Längsnut 17 des Detektors 15 durch eine lösbare Verbindung durch angedeutete Klemmen 21, 22 positioniert ist.

Diese queren Ausnehmungen 18, 19 sind so ausgestaltet, dass zum Beispiel Kabelbinder als Klemmen 21, 22 um das Elektrokabel 11 und um Stege in den Ausnehmungen 18, 19 geschlauft und festgespannt werden. Bei der Verbindung des Detektors 15 mit dem Elektrokabel könnten auch Schraubenklemmen oder ähnliches verwendet werden oder es könnte lose eingelegt sein.

Mit dieser Ausführung der Montage des Detektors 15 um das im Innern des Küchenmöbels fest installierten Elektrokabel 11 muss weder das Elektrokabel 11 demontiert noch seine Kunststoffisolation 13 aufgeschnitten oder anderweitig beschädigt werden.

Dieser wenigstens eine Detektor 15 umfasst erfindungsgemäß einen dreiachsigen Magnetfeldsensor, mittels dem zumindest die bei Stromfluss entstehenden und sich ändernden Streufelder der Magnetfelder im Elektrokabel 11 festgestellt werden, wodurch bei einem Auftreten bzw. bei Wegfall solcher Streufelder jeweils ein entsprechendes Signal an die Steuerung der Dunstabzugsvorrichtung übertragen wird. Dieser dreiachsige Magnetfeldsensor ist derart im Detektor 15 integriert, dass er im montierten Zustand teilweise am Elektrokabel 11 angrenzt, so dass er diese bei Stromfluss vorhandenen Streufelder zuverlässig feststellen kann.

Da ein solcher Magnetfeldsensor an sich bekannt ist, ist er nicht näher dargestellt und erläutert. Es kann sich bei diesem geomagnetischen dreiachsigen Magnetfeldsensor um den Sensortyp von Bosch mit der Bezeichnung BMM 150 handeln. Mit diesem Magnetfeldsensor ist eine Magnetflussdichte von annähernd 0.3 MikroTesla messbar. Er wird mit einem Steuerstrom mit geringer Spannung von maximal ein paar Volts versorgt. Zu diesem Zwecke ist ein in das Gehäuse 16 des Detektors 15 führendes Kabel 14 vorgesehen, das an eine Energiequelle angeschlossen wird. Der Magnetfeldsensor weist zweckmässigerweise eine digitale Schnittstelle auf, welche die Schwellenüber- bzw. -unterschreitung des Streufeldes ermittelt und daraus eine Signalübertragung zur Steuerung der Dunstabzugsvorrichtung für ihr Ein- bzw. Ausschalten erfolgt.

Mit diesem Magnetfeldsensor besteht der weitere Vorteil, dass mit diesem geringen Steuerstrom ein sehr geringer Energieverbrauch desselben entsteht, auch wenn permanent oder getaktet ein Steuerstrom aufrechterhalten wird, damit jederzeit festgestellt werden kann, wenn das Kochfeld eingeschaltet wird.

Es ist ein Signalübertragungsmittel im Detektor 15 zur Steuerung der Dunstabzugsvorrichtung installiert, welches durch eine Kabel- und/oder eine Funkverbindung realisiert sein kann. Eine Kabelverbindung kann beispielsweise durch den ohnehin vorhandenen Datenbus, der zur Dunstabzugsvorrichtung geführt ist, hergestellt werden. Bei einer Funkverbindung kann die Signalübertragung via Bluetooth oder ein beliebiges Funkmittel erfolgen.

Des Weiteren ist der Dunstabzugsvorrichtung eine betätigbare elektronische Schalteinrichtung zugeordnet, welche mit ihrer Steuerung zusammenwirkt. So kann ihr Sauggebläse beispielsweise durch die Steuerung automatisch unmittelbar oder verzögert ein- bzw. ausgeschaltet werden, wenn das Heizmittel des Küchengerätes ein- bzw. ausgeschaltet und das entsprechende Signal vom Detektor 15 zur Steuerung übertragen wird.

Es versteht sich von selbst, dass die Schalteinrichtung hierarchisch in übergeordneter Funktion steht und dass durch diese auf das bewirkte automatische Ein- und Ausschalten manuell eingegriffen werden kann.

Die Erfindung ist mit dem oben erläuterten Ausführungsbeispiel ausreichend dargetan. Sie könnte aber selbstverständlich noch durch andere Varianten erläutert sein. So könnten auch mehrere Detektoren 15 mit je einem gleichwertigen Sensor wie ein solcher geomagnetischer Magnetfeldsensor verwendet werden. Der Detektor 15 und damit der Magnetfeldsensor könnten auch das Elektrokabel 11 rundherum umgeben oder sie könnten neben diesem positioniert sein. Beim Magnetfeldsensor kann es sich um einen oder mehrere Hallsensoren handeln.

Der Detektor 15 könnte auch so ausgestaltet sein, dass mit ihm nicht nur der Stromdurchfluss im Elektrokabel 11 des Küchengerätes beim Ein- bzw. Ausschalten festgestellt wird, sondern dass beispielsweise die Stromstärke gemessen und damit die Steuerung bei der Dunstabzugsvorrichtung sogar so eingestellt sein könnte, dass unterschiedliche Absaugleistungen in Abhängigkeit der Stromstärke erfolgen könnten.

Auch die gesamte Anordnung der Dunstabzugsvorrichtung und des Küchengerätes könnten je nach Gegebenheiten unterschiedlich ausgeführt sein.

### Bezugszeichenliste:

- 10: Kabelkanal
- 11: Elektrokabel
- 12: Einzelleiter
- 13: Kunststoffisolation
- 14: Kabel
- 15: Detektor
- 16: Gehäuse
- 17: Längsnut
- 18: erste Ausnehmung
- 19: zweite Ausnehmung
- 21: erste Klemme
- 22: zweite Klemme

## Patentansprüche

1. Verfahren zum Betrieb eines Systems mit einer Dunstabzugsvorrichtung für ein Küchengerät des Systems, vorzugsweise für ein Kochfeld des Systems mit mehreren Kochplatten, bei dem ein Heizmittel des Küchengerätes über ein mit diesem verbundenes Elektrokabel (11) mit Strom versorgt wird, wobei wenigstens ein Detektor (15) des Systems an dem Elektrokabel (11) des Küchengerätes derart bei diesem Elektrokabel (11) installiert wird, dass mit dem Detektor (15) zumindest festgestellt werden kann, wenn ein Stromdurchfluss im Elektrokabel (11) des Küchengerätes ein- und/oder ausgeschaltet wird, und dies vom Detektor (15) durch eine Signalübertragung an die Steuerung der Dunstabzugsvorrichtung übermittelt und die Dunstabzugsvorrichtung in Abhängigkeit des ermittelten Stromflusses im Elektrokabel (11) ein- und/oder ausgeschaltet wird,
**dadurch gekennzeichnet,**
**dass** für den Betrieb des Systems als Detektor (15) ein dreiachsiger Magnetfeldsensor verwendet wird, welcher in einem montierten Zustand zumindest teilweise um das Elektrokabel (11) des Küchengerätes positioniert wird, wobei das Elektrokabel (11) mit mehreren, insbesondere 2 bis 5, verdrillten Einzelleitern (12) und einer diese ummantelnden Kunststoffisolation (13) versehen ist,, wobei mittels dem Magnetfeldsensor zumindest die bei Stromfluss entstehenden Streufelder der Magnetfelder im Elektrokabel (11) festgestellt werden, wodurch bei einem Auftreten und/oder bei Wegfall solcher Streufelder jeweils ein entsprechendes Signal an die Steuerung der Dunstabzugsvorrichtung übertragen wird.

2. Verfahren nach Anspruch 1, **dadurch gekennzeichnet, dass** der jeweilige Detektor (15) um das insbesondere in einem Küchenmöbel zusammen mit dem Küchengerät eingebaute Elektrokabel (11) durch eine lösbare Verbindung durch Klemmen (21, 22), Schrauben oder andere Befestigungsmittel oder lose um dieses montiert und ein Signalübertragungsmittel vom Detektor (15) zur Steuerung der Dunstabzugsvorrichtung installiert wird.

3. Verfahren nach Anspruch 2, **dadurch gekennzeichnet, dass** diese Montage des jeweiligen Detektors (15) um das im Innern des Küchenmöbels fest installierten Elektrokabels (11) derart erfolgt, dass weder das Elektrokabel (11) demontiert noch die Kabelisolation (13) aufgeschnitten oder verändert werden muss.

4. Verfahren nach einem der Ansprüche 1 bis 3, **dadurch gekennzeichnet, dass** der Detektor (15) um das Elektrokabel (11) für das Heizmittel des Küchengerätes positioniert wird, und nur zu dem Zeitpunkt ein Signal an die Steuerung der Dunstabzugsvorrichtung überträgt, wenn das Heizmittel und damit der Stromfluss des Küchengerätes ein- und/oder ausgeschaltet wird.

5. Verfahren nach Anspruch 4, **dadurch gekennzeichnet, dass** mindestens ein Lüfter der Dunstabzugsvorrichtung durch die Steuerung automatisch unmittelbar oder verzögert ein- und/oder ausgeschaltet wird, wenn das Heizmittel des Küchengerätes ein- und/oder ausgeschaltet und das entsprechende Signal vom Detektor (15) zur Steuerung der Dunstabzugsvorrichtung übertragen wird.

6. Verfahren nach einem der Ansprüche 1 bis 5, **dadurch gekennzeichnet, dass** der Dunstabzugsvorrichtung eine betätigbare elektronische Schalteinrichtung zugeordnet ist, mittels welcher als hierarchisch übergeordnete Funktion ein durch den Detektor (15) bewirktes automatisches Ein- und Ausschalten der Dunstabzugsvorrichtung manuell geändert werden kann.

7. System umfassend ein Küchengerät, eine Dunstabzugsvorrichtung und einen Detektor (15) zur Anordnung an ein Elektrokabel (11) des Küchengerätes, wobei die Dunstabzugsvorrichtung eine Steuerung und eine elektronische Schalteinrichtung, die dazu eingerichtet ist, ein Ein- und/oder Ausschalten der Dunstabzugsvorrichtung zu ermöglichen, aufweist, wobei der Steuerung der mit ihr verbundene Detektor (15) zugeordnet ist, der dazu eingerichtet ist, an dem Elektrokabel (11) für die Stromversorgung des Küchengerätes montiert zu werden, wobei der Detektor (15) dazu ausgebildet ist, dass zumindest festgestellt werden kann, wenn ein Stromdurchfluss im Elektrokabel (11) des Küchengerätes ein- und/oder ausgeschaltet wird, und wobei der Detektor (15) dazu ausgebildet ist, dies durch eine Signalübertragung, insbesondere durch eine Kabel- und/oder Funkverbindung, an eine Steuerung einer Dunstabzugsvorrichtung zu übermitteln, wobei in einem Betriebszustand ein Signal an die Steuerung durch eine Kabel- und/oder Funkverbindung übertragbar ist, zumindest wenn ein Stromfluss im Elektrokabel (11) ein- und/oder ausgeschaltet wird, und wobei die Dunstabzugsvorrichtung in Abhängigkeit des ermittelten Stromflusses im Elektrokabel (11) ein- und/oder ausgeschaltet wird,
**dadurch gekennzeichnet,**
**dass** der Detektor (15) einen dreiachsigen Magnetfeldsensor umfasst, welcher derart ausgestaltet ist, dass er in einem montierten Zustand zumindest teilweise um das Elektrokabel (11) des Küchengerätes positioniert ist, wobei das Elektrokabel (11) mit mehreren, insbesondere 2 bis 5, verdrillten Einzelleitern (12) und einer diese ummantelnden Kunststoffisolation (13) versehen ist.

8. System nach Anspruch 7, **dadurch gekennzeichnet, dass** dieser wenigstens eine Detektor (15) derart ausgestaltet ist, dass er in einem montierten Zustand zumindest teilweise um das Elektrokabel (11) für das Heizmittel des Küchengerätes positioniert ist.

9. System nach Anspruch 8, **dadurch gekennzeichnet, dass** der Magnetfeldsensor ein geomagnetischer dreiachsiger Magnetfeldsensor vom Typ Bosch BMM 150 ist, mit welchem eine Magnetflussdichte von annähernd 0.3 MikroTesla messbar und mit einer Spannungsversorgung von maximal ein paar Volts versehbar ist.

## Claims

1. Method for operating a system having a vapour extraction device for a kitchen appliance of the system, preferably for a hob of the system with a plurality of hotplates, in which a heating means of the kitchen appliance is supplied with power via an electric cable (11) connected thereto, wherein at least one detector (15) of the system being connected to the electric cable (11) of the kitchen appliance is installed on this electrical cable (11) in such a way that the detector (15) can at least be used to detect when a current flow in the electrical cable (11) of the kitchen appliance is switched on and/or off, and this is transmitted by the detector (15) to the control unit of the vapour extraction device by means of a signal transmission and the vapour extraction device is switched on and/or off as a function of the detected current flow in the electrical cable (11),
**characterized in that**
for the operation of the system a triaxial magnetic field sensor is used as the detector (15) which, in a mounted state, is positioned at least partially around the electrical cable (11) of the kitchen appliance, wherein the electric cable (11) is provided with several, in particular 2 to 5, twisted individual conductors (12) and a plastic insulation (13) encasing them, wherein by means of the magnetic field sensor at least the stray fields of the magnetic fields in the electric cable (11) arising during current flow are detected, whereby when such stray fields occur and/or cease to occur, in each case a corresponding signal is transmitted to the control unit of the vapour extraction device.

2. Method according to claim 1, **characterized in that** the respective detector (15) is arranged around the electrical cable installed in particular in a piece of kitchen furniture together with the kitchen appliance (11) by a detachable connection by clamps (21, 22), screws or other fastening means or loosely mounted around it and a signal transmission means from the detector (15) is installed to control the vapour extraction device.

3. Method according to claim 2, **characterized in that** this mounting of the respective detector (15) around the electric cable (11) permanently installed in the interior of the kitchen furniture is done in such a way, that neither the electric cable (11) has to be dismounted nor the cable insulation (13) must be cut open or changed.

4. Method according to any one of claims 1 to 3, **characterized in that** the detector (15) is positioned around the electric cable (11) for the heating means of the kitchen appliance, and only at the time transmits a signal to the control unit of the vapour extraction device when the heating means and thus the current flow of the kitchen appliance is switched on and/or off.

5. Method according to claim 4, **characterized in that** at least a fan of the vapour extraction device is automatically switched on and/or off immediately or with a delay by the control when the heating means of the kitchen appliance is switched on and/or off and the corresponding signal is transmitted from the detector (15) to the control unit of the vapour extraction device.

6. Method according to any one of claims 1 to 5, **characterized in that** the vapour extraction device is assigned an operable electronic switching device, by means of which, as a hierarchically superordinate function, an automatic switching on and off of the vapour extraction device can be changed manually.

7. System comprising a kitchen appliance, a vapour extraction device and a detector (15) for arrangement on an electric cable (11) of the kitchen appliance, wherein the vapour extraction device has a control unit and an electronic switching device which is set up to enable the vapour extraction device to be switched on and/or off, wherein the control unit is associated with the detector (15) connected to it, which is arranged to be mounted on the electric cable (11) for the power supply of the kitchen appliance, wherein the detector (15) being designed to detect at least when a current flow in the electric cable (11) of the kitchen appliance is switched on and/or off, and wherein the detector (15) is designed in such a way, to transmit this by a signal transmission, in particular by a cable and/or radio connection, to a control unit of a vapour extraction device, wherein in an operating state a signal can be transmitted to the control unit by a cable and/or radio connection, at least when a current flow in the electric cable (11) is switched on and/or off, and wherein the vapour extraction device is switched on and/or off as a function of the detected current flow in the electric cable (11),
**characterized in that**
that the detector (15) comprises a triaxial magnetic field sensor which is designed in such a way that in a mounted state it is positioned at least partially around the electric cable (11) of the kitchen appliance, wherein the electric cable (11) is provided to several, in particular 2 to 5, twisted individual conductors (12) and a plastic insulation (13) encasing them.

8. System according to claim 7, **characterized in that** this at least one detector (15) is designed in such a way that, in a mounted state, it is positioned at least partially around the electrical cable (11) for the heating means of the kitchen appliance.

9. System according to claim 8, **characterized in that** the magnetic field sensor is a geomagnetic triaxial magnetic field sensor of the Bosch BMM 150 type, with which a magnetic flux density of approximately 0.3 MicroTesla can be measured and which can be provided with a voltage supply of a maximum of a few volts.

## Revendications

1. Procédé d'exploitation d'un système comprenant une hotte aspirante pour un appareil de cuisine du système, de préférence pour une plaque de cuisson du système avec plusieurs plaques de cuisson, dans laquelle un moyen de chauffage de l'appareil de cuisine est alimenté en électricité par un câble électrique (11) relié à celui-ci, au moins un détecteur (15) du système est installé au câble électrique (11) de l'appareil de cuisine de cette manière est installée sur le câble électrique (11) de telle sorte que le détecteur (15) permette au moins de constater lorsqu'un flux de courant dans le câble électrique (11) de l'appareil de cuisine est activé et/ou désactivé, et que ceci soit transmis par le détecteur (15) à la commande de la hotte aspirante par une transmission de signal et que la hotte aspirante soit mis en marche et/ou désactivé en fonction du débit de courant déterminé dans le câble électrique (11), **caractérisé en ce que**
pour d'exploitation du système, on utilise comme détecteur (15) un capteur de champ magnétique à trois axes qui, à l'état monté, est placé au moins partiellement autour du câble électrique (11) de l'appareil de cuisine, le câble électrique (11) étant pourvu de plusieurs conducteurs individuels (12) torsadés, en particulier de 2 à 5, et d'une isolation en matière plastique (13) qui les enveloppe, au moins les champs de dispersion des champs magnétiques dans le câble électrique (11), qui se forment lors du passage du courant, étant détectés au moyen du capteur de champ magnétique, ce qui fait qu'en cas d'apparition et/ou de disparition de tels champs de dispersion, un signal correspondant est transmis à la commande de la hotte aspirante.

2. Procédé selon la revendication 1, **caractérisé en ce que** le détecteur (15) respectif (15) est monté autour du câble électrique (11), le câble électrique placé en particulier dans un meuble de cuisine avec l'appareil de cuisine (11), et place par une connexion amovible au moyen de pinces (21, 22), de vis ou d'autres moyens de fixation, ou monté de manière lâche autour de celui-ci, et un moyen de transmission de signal du détecteur (15) est installé pour commander la hotte aspirante.

3. Procédé selon la revendication 2, **caractérisé en ce que** ce montage de chaque détecteur (15) autour du câble électrique (11) installé de manière fixe à l'intérieur du meuble de cuisine, que ni le câble électrique (11) ne soit démonté, ni l'isolation du câble (13) ne soit découpée ou doit être modifié.

4. Procédé selon l'une quelconque des revendications 1 à 3, **caractérisé en ce que** le détecteur (15) est positionné autour du câble électrique (11) pour le moyen de chauffage de l'appareil de cuisine, et ne transmet un signal à la commande de la hotte aspirante q'au moment où le moyen de chauffage et donc le flux électrique de l'appareil de cuisine est activé et/ou désactivé.

5. Procédé selon la revendication 4, **caractérisé en ce qu'**au moins un ventilateur de la hotte aspirante est automatiquement activé et/ou désactivé par la commande, de manière immédiate ou différée lorsque les moyens de chauffage de l'appareil de cuisine sont activés et/ou désactivés et que le signal correspondant est transmis par le détecteur (15) à la commande de la hotte aspirante.

6. Procédé selon l'une des revendications 1 à 5, **caractérisé en ce que** la hotte aspirante est équipé d'un dispositif de commutation électronique actionnable au moyen, en tant que fonction hiérarchiquement supérieure, permet d'activer ou de désactiver une fonction de la hotte aspirante provoquée par le détecteur (15).

7. Système comprenant un appareil de cuisine, une hotte aspirante et un détecteur (15) destiné à être disposé sur un câble électrique (11) de l'appareil de cuisine, la hotte aspirante comprenant une commande et un dispositif de commutation électronique qui est conçu pour permettre la mise en marche et/ou l'arrêt de la hotte aspirante, la commande étant associée au détecteur (15) qui lui est relié, qui est conçu pour être fixé au câble électrique (11) pour l'alimentation en courant électrique de l'appareil de cuisine, le détecteur (15) étant conçu pour être capable de détecter au moins lorsqu'un courant circule dans le câble électrique (11) de l'appareil de cuisine est activé et/ou désactivé, et le détecteur (15) étant conçu à cet effet, de transmettre ce fait par une transmission de signaux, en particulier par une liaison par câble et/ou par radio, à une commande de la hotte aspirante, un signal étant transmis dans un état de fonctionnement à la commande par une liaison par câble et/ou par radio, au moins lorsque un flux de courant dans le câble électrique (11) est activé et/ou désactivé, et où le hotte aspirante est activée et/ou désactivée en fonction du flux de courant déterminé dans le câble électrique (11),
**caractérisé en ce que**
**en ce que** le détecteur (15) comprend un capteur de champ magnétique à trois axes, qui est conçu de telle manière, qu'à l'état monté, il entoure au moins partiellement le câble électrique (11) de l'appareil de cuisine, le câble électrique (11) étant équipé de plusieurs, en particulier de 2 à 5, conducteurs individuels torsadés (12) et d'une isolation en matière plastique (13) qui les recouvre.

8. Système selon la revendication 7, **caractérisé en ce que** ledit au moins un détecteur (15) est conçu de telle sorte qu'à l'état monté, il est au moins partiellement positionné autour du câble électrique (11) pour le moyen de chauffage de l'appareil de cuisine.

9. Système selon la revendication 8, **caractérisé en ce que** le capteur de champ magnétique est un capteur de champ géomagnétique à trois axes du type Bosch BMM 150, avec lequel on peut détecter une densité de flux magnétique d'environ 0,3 microtesla et peut être alimenté en tension de de quelques volts au maximum.
